# EUROPEAN PATENT SPECIFICATION

(11) **EP 2 043 377 B1**
(45) Date of publication and mention of the grant of the patent: **19.05.2010**
(21) Application number: 08748581.9
(22) Date of filing: 15.05.2008
(51) Int. Cl.: H04W 88/08, H04W 16/00, H04B 1/40

(54) **A SECTOR BASE STATION**
SEKTORBASISSTATION
STATION DE BASE DE SECTEUR

(30) Priority: 18.05.2007 CN 200710099398
(43) Date of publication of application: 01.04.2009
(73) Proprietor: Huawei Technologies Co., Ltd., Longgang District, Shenzhen Guangdong 518129 (CN)
(72) Inventor: WEN, Hai, Shenzhen Guangdong 518129 (CN); YUE, Ling, Shenzhen Guangdong 518129 (CN); ZHAO, Tianzhong, Shenzhen Guangdong 518129 (CN); PENG, Weihong, Shenzhen Guangdong 518129 (CN); TAN, Shengbin, Shenzhen Guangdong 518129 (CN); WANG, Aimeng, Shenzhen Guangdong 518129 (CN)
(74) Representative: Thun, Clemens
(86) International application number: PCT/CN2008/070975
(87) International publication number: WO 2008/141571

(56) References cited:
- EP-A- 0 652 644
- WO-A-98/45958
- WO-A-2007/000496
- CN-A- 1 251 702
- CN-A- 1 797 967
- CN-A- 101 052 170
- US-A1- 2002 077 149
- US-A1- 2003 032 454
- US-A1- 2003 207 680
- US-A1- 2004 157 644
- US-B1- 6 282 184
- US-B1- 6 347 234

## Description

### BACKGROUND OF THE INVENTION

### Field of the Invention

The present invention relates to the field of electronic communication technology, and more particularly to a sector-based base station.

### Background of the Invention

Currently, the mobile communication technology has been widely used in various aspects of daily life and work. Mobile communication is defined as a kind of communication in which the information is transmitted while at least one or both parties in communication are in a mobile state. The two parties in a mobile communication are a base station and a terminal.

Base station, as a form of the radio station, is a radio transceiver station for transmitting information with mobile phone terminals through a mobile switching center in a particular radio coverage area. A base station is mainly constituted by a transceiver, a clock unit, and a baseband processing unit. The transceiver includes an intermediate radio frequency (RF) unit adapted to perform conversion between a baseband signal and an RF signal. After receiving an RF signal from a terminal, the base station converts the received RF signal into a baseband signal through the RF unit of the transceiver, and converts a baseband signal to be sent into an RF signal and sends the RF signal.

The networking modes of different base stations may employ different solutions about the intermediate RF units, and generally the following two solutions are adopted.

First, an omni-directional base station is implemented by a concentric circle mode.
That is, the electric wave coverage of a single sector (i.e., one circle) is achieved through a single base station. The whole base station only has one set of intermediate RF unit, so the communication capacity of the base station is rather small.

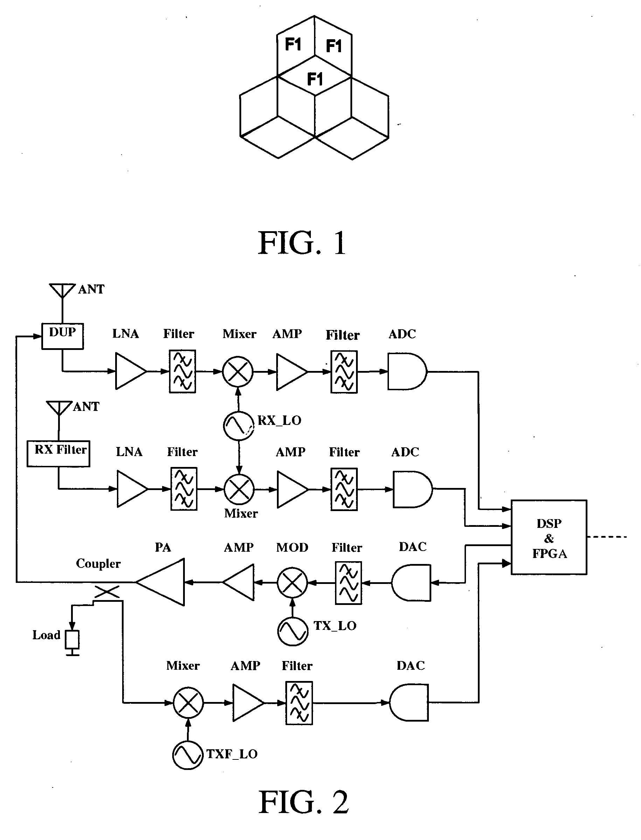

Secondly, in order to increase the communication capacity of the base station, a multi-sector base station is implemented by a cellular networking mode. That is, one base station covers multiple sectors (as shown in FIG. 1, one base station covers 3 sectors marked with F1). Generally, several sets of antennas pointing to different directions are adapted to form several mobile communication sectors. Each sector is corresponding to a different intermediate RF unit, and the intermediate RF units are independent from each other.

FIG 2 is a structural block diagram of an intermediate RF unit in an omni-directional base station, which aims at illustrating the processing of receiving signals and transmitting signals by the intermediate RF unit in the base station. In the structural block diagram shown in FIG. 2, the intermediate RF unit is in a typical form with two inputs and one output (i.e., two receiving units plus one transmitting unit). Currently, the specific implementation modes of the intermediate RF unit also include one input and one output (i.e., one receiving unit plus one transmitting unit) and multiple-input multiple-output (MIMO) (i.e., multiple receiving units plus multiple transmitting units). It is understandable that, the signal processing carried out by each unit is similar to that in the typical two-input one-output form of FIG 2, so that the signal processing carried out by the intermediate RF unit in the typical two-input one-output form will be illustrated in detail below.

The intermediate RF unit processes a receiving master signal from a transmitting/receiving antenna through an RF signal receiving unit built therein. The detailed process includes the following steps. First, the receiving master signal from the transmitting/receiving antenna is isolated and filtered from a transmitting signal by a filter unit (for example, a duplexer filter (DUP) in FIG 2). Next, the signal is amplified by an amplifier unit (for example, a low noise amplifier (LNA) in FIG 2) and filtered by a filter unit (for example, an RF filter in FIG 2) and processed by a mixer unit (for example, a mixer in FIG 2) to obtain a lower frequency, and then the signal is further amplified by an amplifier unit (for example, an amplifier (AMP) in FIG. 2), and filtered by a filter unit (for example, an intermediate frequency filter in FIG 2). Afterwards, an analog-to-digital conversion is performed on the signal by an analog-to-digital converter unit (for example, an analog-to-digital converter (ADC) in FIG. 2), and then a digital signal processing is performed on the signal in a digital signal processing unit including a digital signal processor (DSP) & field-programmable gate array (FPGA). Finally, the signal is sent out for the baseband signal processing.

The intermediate RF unit processes a receiving diversity signal obtained from a diversity antenna through the RF signal receiving unit built therein. The detailed process includes the following steps. First, the receiving diversity signal is processed by a filter unit (for example, a receiving filter (RX Filter) in FIG. 2), and then the subsequent processing is similar to that of the receiving master signal.

The intermediate RF unit processes a transmitting baseband signal through an RF signal transmitting unit built therein. The detailed process includes the following steps. First, the transmitting baseband signal is processed by a digital signal processing unit including a DSP & FPGA, and then sent to a digital-to-analog converter unit (for example, a digital-to-analog converter (DAC) in FIG 2) to finish a digital-to-analog conversion. Afterwards, the signal is modulated by a modulation unit (for example, a modulator (MOD) in FIG. 2) to an RF frequency. Then, the signal is amplified by an amplifier unit (for example, the AMP in FIG 2), and then, the power of the signal is amplified by a power amplifier unit (for example, a power amplifier (PA) in FIG 2). Finally, the signal is transmitted to a filter unit (for example, the DUP in FIG 2), and sent out by an antenna (ANT).

The intermediate RF unit processes a transmitting feedback signal through a transmission feedback unit built therein. The detailed process includes the following steps. First, a part of the power of the transmitting signal is coupled by a coupler and down-converted into a lower frequency by a mixer unit (for example, the mixer in FIG 2). Then, the signal is processed by an amplifier unit (for example, the AMP in FIG 2) and a filter unit (for example, the filter in FIG 2) and then sent to an analog-to-digital converter unit. Finally, the signal is sent to a digital signal processing unit including a DSP & FPGA to be processed, so as to serve as a feedback input of a power-amplification digital predistortion signal. The power-amplification digital predistortion technology is a way of improving the power amplification linearity.

In a multi-sector base station implemented in a cellular networking mode, the base station generally covers two or more than two sectors, each sector employs an independent intermediate RF unit, and each intermediate RF unit is designed in a different module. The intermediate RF unit in each sector includes all the parts of the intermediate RF unit in the omni-directional base station of FIG 2. In the multi-sector base station, the intermediate RF unit of each sector works independently.

During the research, the inventor found that, in the multi-sector base station, each sector has an intermediate RF unit, and the intermediate RF unit of each sector is independent from each other. As a result, the circuit design is rather complicated. Moreover, as the circuit unit has a poor adaptability, the cost is rather high. US 2004/157644 relates to a communication system transmitter or receiver module having integrated radio frequency circuitry directly coupled to antenna element. In this patent, only a shared RX/TX LO and a baseband circuitry have been depicted.

Therefore, till now, there is no sector-based base station with a simpler circuit design and a lower cost.

### SUMMARY OF THE INVENTION

Accordingly, in an embodiment, the present invention is directed to a sector-based base station, which is capable of sharing an intermediate radio frequency (RF) unit among different sectors.

The embodiment of the present invention is implemented in the following technical solution.

In an embodiment of the present invention, a sector-based base station including at least two sets of RF signal transmitting units when the base station covers at least two sectors and RF signal receiving units is provided. Each of the RF signal transmitting units is provided with a modulation unit or a mixer unit and a digital-to-analog converter unit. Each of the RF signal receiving units is provided with a mixer unit and an analog-to-digital converter unit. The base station includes at least one of a shared transmission RF local oscillator TX_LO, a shared receiving RF local oscillator RX_LO, a shared digital signal processing unit and a shared transmission feedback unit.

the shared TX_LO is connected to the modulation unit or the mixer unit in each of the RF signal transmitting units, and serves as a transmission RF local oscillator for all sectors in the base station;

the shared RX_LO is connected to the mixer unit in each of the RF signal receiving units, and serves as a receiving RF local oscillator for all the sectors in the base station;

the shared digital signal processing unit is connected to the digital-to-analog converter unit and/or the analog-to-digital converter unit, and adapted to process digital signals of all the sectors in the base station;

The shared transmission feedback unit is completely or partially connected to the RF signal transmitting unit that requires a transmission feedback in each sector, and adapted to perform a feedback processing on transmitting signals of all the sectors in the base station.

As seen from the above embodiment of the present invention, the technical solution of sharing the intermediate RF unit circuit in the sector-based base station is adopted to reduce the number of elements used in the circuit while ensuring the communication capacity of the base station. As such, the reliability index of a single board is improved, and the system reliability is also enhanced. Meanwhile, the material cost and the time required for debugging are both reduced, thus lowering the cost of the

### BRIEF DESCRIPTION OF THE DRAWINGS

The present invention will become more fully understood from the detailed description given herein below for illustration only, which thus is not limitative to the present invention.

FIG 1 is a schematic view of a cellular networking sector coverage in the prior art;

FIG 2 is a structural block diagram of an intermediate RF unit of an omni-directional base station in the prior art;

FIG 3 is a structural view of an intermediate RF unit according to an embodiment of the present invention; and

FIG 4 is a structural view of an intermediate RF unit in a 3-sector base station according to an embodiment of the present invention.

### DETAILED DESCRIPTION OF THE EMBODIMENTS

In the embodiment of the present invention, through the design of sharing an intermediate RF unit in the sector-based base station, an intermediate RF circuit for a multi-sector base station is configured in one module, so as to achieve a large communication capacity with a low cost. When the base station covers N (N≥2) sectors, the intermediate RF unit includes N sets of RF signal transmitting units and RF signal receiving units. Each of the RF signal transmitting units is provided with a modulation unit or a mixer unit and a digital-to-analog converter unit. Each of the RF signal receiving units is provided with a mixer unit and an analog-to-digital converter unit.

The design of sharing an intermediate RF unit includes at least one of the following circumstances: completely or partially sharing the transmission feedback unit of each sector, sharing the transmission RF local oscillator of each sector, sharing the receiving RF local oscillator of each sector, and sharing the digital signal processing unit (for example, DSP & FPGA, or other digital signal processing elements) of each sector. In particular, the following four sharing circumstances are included.

Circumstance 1: sharing the transmission feedback unit, the transmission RF local oscillator, the receiving RF local oscillator, and the digital signal processing unit of each sector;

Circumstance 2: sharing one unit selected from the transmission feedback unit, the transmission RF local oscillator, the receiving RF local oscillator, and the digital signal processing unit of each sector;

Circumstance 3: sharing any two units selected from the transmission feedback unit, the transmission RF local oscillator, the receiving RF local oscillator, and the digital signal processing unit of each sector; and

Circumstance 4: sharing any three units selected from the transmission feedback unit, the transmission RF local oscillator, the receiving RF local oscillator, and the digital signal processing unit of each sector.

The above units after being shared may respectively serve as a shared transmission feedback unit, a shared transmission RF local oscillator, a shared receiving RF local oscillator, and a shared digital signal processing unit.

Moreover, in the above four circumstances, if the transmission feedback unit of each sector is shared, the following circumstances may exist.

Circumstance 1: sharing the mixer unit, a feedback RF local oscillator, an amplifier unit, a filter unit, and an analog-to-digital converter unit in the transmission feedback unit of each sector;

Circumstance 2: sharing one unit selected from the mixer unit, the feedback RF local oscillator, the amplifier unit, the filter unit, and the analog-to-digital converter unit in the transmission feedback unit of each sector;

Circumstance 3: sharing any two units selected from the mixer unit, the feedback RF local oscillator, the amplifier unit, the filter unit, and the analog-to-digital converter unit in the transmission feedback unit of each sector;

Circumstance 4: sharing any three units selected from the mixer unit, the feedback RF local oscillator, the amplifier unit, the filter unit, and the analog-to-digital converter unit in the transmission feedback unit of each sector; and

Circumstance 5: sharing any four units selected from the mixer unit, the feedback RF local oscillator, the amplifier unit, the filter unit, and the analog-to-digital converter unit in the transmission feedback unit of each sector.

The circumstances 2 to 5 illustrate the situations of partially sharing the transmission feedback unit. It is understandable that, when the mixer unit is shared, the feedback RF local oscillator is also shared. However, when the feedback RF local oscillator shared is shared, the mixer unit may be shared or may not be shared. Moreover, when any of the mixer unit, the feedback RF local oscillator, the amplifier unit, the filter unit, and the analog-to-digital converter unit in the transmission feedback unit is shared, the above units may be completely or partially shared. For example, when the base station covers N (N≥3) sectors, if the amplifier units are shared, the amplifier units may be completely shared, i.e., the transmission feedback unit only has one shared amplifier unit without any amplifier unit, or the amplifier units may be partially shared, i.e., the transmission feedback unit has n shared amplifier units and m amplifier units, i.e., 1<(n+m) ≤ (N-1).

The above units after being shared may respectively serve as a shared mixer unit, a shared feedback RF local oscillator, a shared amplifier unit, a shared filter unit, and a shared analog-to-digital converter unit.

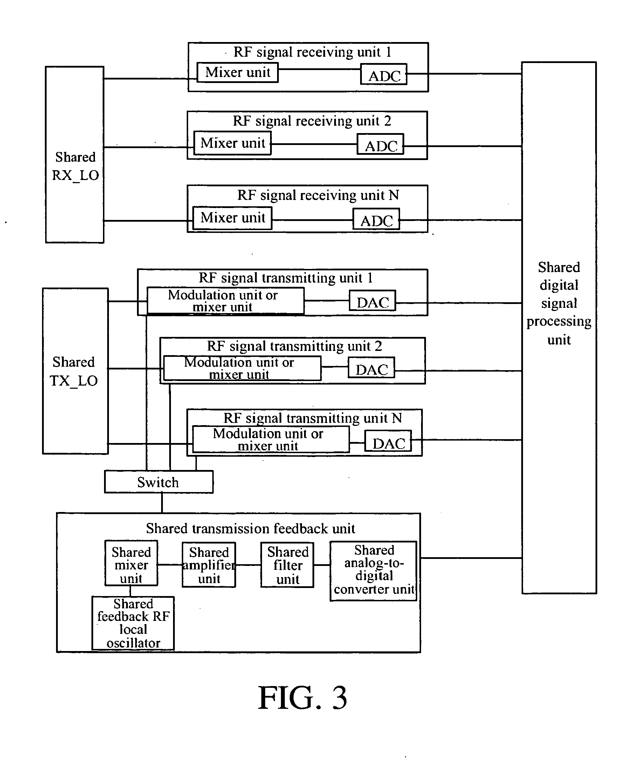

FIG 3 is a structural view of an intermediate RF unit according to a first embodiment of the present invention.

The intermediate RF unit includes at least one of a shared transmission RF local oscillator TX_LO, a shared receiving RF local oscillator RX_LO, a shared digital signal processing unit, and a shared transmission feedback unit. That is, in this embodiment of the present invention, the intermediate RF unit may include the shared transmission RF local oscillator TX_LO, the shared receiving RF local oscillator RX_LO, the shared digital signal processing unit, and the shared transmission feedback unit; or one unit selected from the shared transmission RF local oscillator TX_LO, the shared receiving RF local oscillator RX_LO, the shared digital signal processing unit, and the shared transmission feedback unit; or any two units selected from the shared transmission RF local oscillator TX_LO, the shared receiving RF local oscillator RX_LO, the shared digital signal processing unit, and the shared transmission feedback unit; or any three units selected from the shared transmission RF local oscillator TX_LO, the shared receiving RF local oscillator RX_LO, the shared digital signal processing unit, and the shared transmission feedback unit.

The shared TX_LO is connected to the modulation unit in each RF signal transmitting unit (for example, the RF signal transmitting units 1 to N in FIG 3), and serves as a transmission RF local oscillator for all the sectors in the base station. The modulation unit is adapted to perform a quadrature modulation on signals. If the quadrature modulation portion of the modulation unit is disposed in the shared digital signal processing unit, the modulation unit is substituted by the mixer unit in each RF signal transmitting unit. In this case, the shared TX_LO is connected to the mixer unit in each RF signal transmitting unit, and serves as a transmission RF local oscillator for all the sectors in the base station.

The shared RX_LO is connected to the mixer unit in each RF signal receiving unit (for example, the RF signal receiving units 1 to N in FIG 3), and serves as a receiving RF local oscillator for all the sectors in the base station.

The shared digital signal processing unit is connected to the digital-to-analog converter unit and/or the analog-to-digital converter unit, and is adapted to process digital signals of all the sectors in the base station.

The shared transmission feedback unit is connected to the RF signal transmitting unit that requires a transmission feedback in each sector, so as to perform a feedback processing on the transmitting signals of all the sectors in the base station, in which the connection process may be implemented through, for example, a coupling manner.

In addition to the shared transmission feedback unit, the base station further includes a switch.

The switch is connected to the shared transmission feedback unit and the RF signal transmitting unit that requires a transmission feedback, and may be a single-pole multi-throw switch or other switches with selective functions.

When the shared transmission feedback unit is partially shared, the shared transmission feedback unit specifically includes at least one of a shared mixer unit, a shared feedback RF local oscillator TXF_LO, a shared amplifier unit, a shared filter unit, and a shared analog-to-digital converter unit. That is, in this embodiment of the present invention, the shared transmission feedback unit may include the shared mixer unit, the shared feedback RF local oscillator TXF_LO, the shared amplifier unit, the shared filter unit, and the shared analog-to-digital converter unit; or one unit selected from the shared mixer unit, the shared feedback RF local oscillator TXF_LO, the shared amplifier unit, the shared filter unit, and the shared analog-to-digital converter unit; or any two units selected from the shared mixer unit, the shared feedback RF local oscillator TXF_LO, the shared amplifier unit, the shared filter unit, and the shared analog-to-digital converter unit; or any three units selected from the shared mixer unit, the shared feedback RF local oscillator TXF_LO, the shared amplifier unit, the shared filter unit, and the shared analog-to-digital converter unit; or any four units selected from the shared mixer unit, the shared feedback RF local oscillator TXF_LO, the shared amplifier unit, the shared filter unit, and the shared analog-to-digital converter unit. Moreover, in any of the above circumstances, the shared transmission feedback unit may include at least one of a mixer unit, a feedback RF local oscillator TXF_LO, an amplifier unit, a filter unit, and an analog-to-digital converter unit.

The shared mixer unit is connected to the amplifier unit and/or the shared amplifier unit in the shared transmission feedback unit, and is adapted to perform a mixing processing on all feedback signals during a feedback processing on the transmitting signals of all the sectors in the base station.

The shared TXF_LO is connected to the mixer unit and/or the shared mixer unit in the shared transmission feedback unit, and serves as a feedback RF local oscillator for all the feedback signals during the feedback processing on the transmitting signals of all the sectors in the base station.

The shared amplifier unit is connected to the mixer unit and/or the shared mixer unit in the shared transmission feedback unit and the filter unit or the shared filter unit in the shared transmission feedback unit, and is adapted to perform an amplification processing on all the feedback signals during the feedback processing on the transmitting signals of all the sectors in the base station.

The shared filter unit is connected to the amplifier unit and/or the shared amplifier unit in the shared transmission feedback unit and the analog-to-digital converter unit or the shared analog-to-digital converter unit in the shared transmission feedback unit, and is adapted to perform a filter processing on all the feedback signals during the feedback processing on the transmitting signals of all the sectors in the base station.

The shared analog-to-digital converter unit is connected to the filter unit and/or the shared filter unit in the shared transmission feedback unit and the shared digital signal processing unit and/or the DSP, and is adapted to perform an analog-to-digital conversion processing on all the feedback signals during the feedback processing on the transmitting signals of all the sectors in the base station.

When the shared transmission feedback unit is completely shared, the switch is located between the RF signal transmitting unit and the shared transmission feedback unit. When the shared transmission feedback unit is partially shared, the switch is used to connect the RF signal transmitting unit to the shared units in the shared transmission feedback unit. That is, depending upon different circumstances of the shared units, one or more switches are required (for example, if only the shared amplifier unit exists, two sets of switches are required, one is used to connect the RF signal transmitting unit to the shared amplifier unit, and the other is disposed between the shared amplifier unit and the filter unit, so as to connect the shared amplifier unit to the filter unit in the shared transmission feedback unit).

A 3-sector base station is taken as a second embodiment below to demonstrate the specific implementation of the device of the present invention.

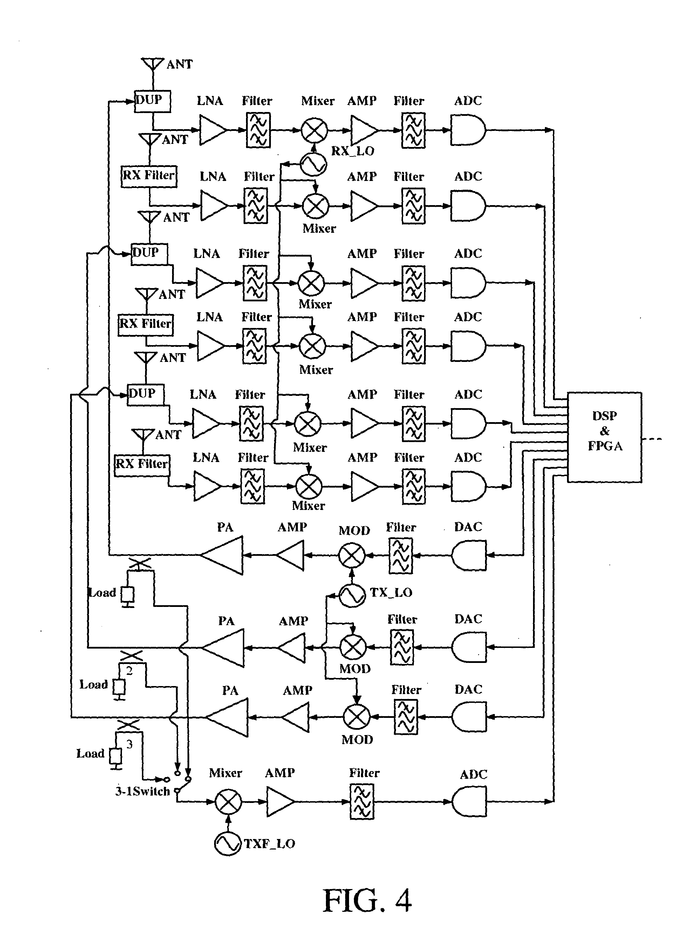

FIG 4 is a structural view of an intermediate RF unit in a 3-sector base station according to an embodiment of the present invention. The structural view of FIG 4 includes the following circumstances of sharing the transmission feedback unit of each sector, sharing the RF local oscillator of each sector, and sharing the DSP & FPGA in the intermediate frequency signal processing portion of each sector. In particular, the shared intermediate RF unit includes a transmission feedback unit, two RF local oscillators, a DSP & FPGA processing portion, three receiving master channels, three receiving diversity channels, and three transmitting channels.

The transmission feedback unit is adapted to realize a function of sharing the transmission feedback unit of each sector. Generally, the function of transmission feedback unit is to provide a feedback input of digital predistortion, and the total power of transmitting signals of each sector is relatively stable. However, after the feedback input disappears, the intermediate frequency signal processing portion still maintains an original state. Therefore, a single-pole three-throw switch can be adopted to take turns to select a power-amplification feedback signal of each sector at different time divisions. In this manner, the three transmission feedback units in the 3-sector base station can be integrated into one unit to share the whole transmission feedback unit among multiple sectors, so that the number of the RF local oscillators TXF_LO in the feedback unit is reduced to one.

The two RF local oscillators include a shared TX_LO adapted to serve as the transmission RF local oscillator of each sector and a shared RX_LO adapted to serve as the receiving RF local oscillator of each sector. That is, the RF signal receiving units and the RF signal transmitting units respectively adopt one local oscillator. Therefore, as for a base station covering N sectors, the number of the receiving/transmission RF local oscillators can be reduced by 2(N-1).

The DSP & FPGA processing portion is adapted to share the DSP & FPGA in the digital signal processing portion of each sector, so as to form the DSP & FPGA in the intermediate frequency signal processing portion into a resource pool for sharing.

The three receiving master channels are adapted to receive master signals.

The three receiving diversity channels are adapted to receive diversity signals.

The three transmitting channels are adapted to transmit baseband signals.

The third embodiment of the present invention is an improvement on the basis of the second embodiment of the present invention. That is, the sharing of a transmission feedback channel of each sector is set as the partial sharing of the transmission feedback channel of each sector, while the sharing of the RF local oscillators of each sector and the sharing of the DSP & FPGA in the intermediate frequency signal processing portion of each sector remain unchanged.

The partial sharing of the transmission feedback channel of each sector is implemented as follows. The single-pole three-throw switch in the feedback channel of the second embodiment of the present invention is moved backwards. Thus, only the part of the circuit behind the switch can be shared, and the part in front of the switch cannot be shared. In this case, three groups of circuits are still needed before the switch. For example, if the single-pole three-throw switch is disposed between the AMP and Filter, three groups of the Mixer, TXF_LO, and AMP circuits and one group of the Filter and ADC circuits are required.

In the second embodiment of the present invention, the receiving and transmission of RF signals and baseband signals implemented by the intermediate RF unit in the sector-based base station are described below.

The intermediate RF unit processes a receiving master signal from the transmitting/receiving antenna in the following manner. First, the receiving master signal from the transmitting/receiving antenna is isolated from a transmitting signal by a DUP, and then amplified by an LNA, filtered by a Filter, and processed by a Mixer to obtain a lower frequency. Afterwards, the signal is again amplified by an AMP, filtered by a Filter, and processed through an analog-to-digital conversion by an ADC. Finally, the signal finishes the digital signal processing in a DSP & FPGA, and then sent out for a baseband signal processing. During the above process, the three receiving master signals share the same RX_LO when being processed by the Mixer to obtain a lower frequency respectively, and share the same DSP & FPGA during the DSP & FPGA processing.

The intermediate RF unit processes a receiving diversity signal from the diversity antenna in the following manner. First, the receiving diversity signal first passes through an RX Filter, and the subsequent processing thereof is similar to that of the receiving master signal. During the above process, the three receiving diversity signals share the same RX_LO when being processed by the Mixer to obtain a lower frequency, and share the same DSP & FPGA during the DSP & FPGA processing.

The intermediate RF unit processes a transmitting baseband signal in the following manner. First, the transmitting baseband signal is processed by the DSP & FPGA, then sent to a DAC for digital-to-analog conversion, and then modulated by a MOD into an RF frequency. Afterwards, the signal is amplified by an AMP, and the power thereof is amplified by a PA. Finally, the signal is sent to a DUP and transmitted by an ANT. During the above process, the three baseband signals share the same DSP & FPGA during the digital signal processing, and share the same TX_LO when being modulated by the MOD respectively.

The intermediate RF unit processes a transmitting feedback signal in the following manner. First, a part of the power of the transmitting signal is coupled by a Coupler and down-converted into a lower frequency by a Mixer. Then, the signal is processed by the AMP and Filter and then sent to an analog-to-digital converter unit, and is finally sent to a DSP & FPGA to be processed, so as to serve as a feedback input of a power-amplification digital predistortion signal. The power-amplification digital predistortion technology is a way of improving the power amplification linearity. During the processing of the transmission feedback signal, the single-pole three-throw switch is set at the current position to achieve the feedback of the transmitting channel 1, and similarly, the single-pole three-throw switch can be moved leftwards by one or two channels to achieve the feedback of the transmitting channel 2 or 3 respectively.

Likewise, if the multi-sector base station covers N sectors (N is a natural number), the embodiment of the present invention can be adopted to achieve the sharing of the intermediate RF unit in the base station. That is, as for the base station covering N sectors, in a desired circumstance, (N-1) feedback channels, (N-1) DSP & FPGA processing portions, and 2(N-1) receiving/transmission RF local oscillators can be saved.

It is understandable that, the intermediate RF units in different base stations have different structures, which may result in variations of the processing of transmitting and receiving signals by the intermediate RF units. However, the method of sharing at least one selected from the RX_LO, the TX_LO, the digital signal processing unit, and the transmission feedback unit in the embodiment of the present invention still can be adopted to process the signals. Moreover, the shared transmission feedback unit can be partially shared.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A sector-based base station, comprising at least two sets of radio frequency (RF) signal transmitting units and RF signal receiving units when the base station covers at least two sectors, wherein each of the RF signal transmitting units is provided with a modulation unit or a mixer unit and a digital-to-analog converter unit, each of the RF signal receiving units is provided with a mixer unit and an analog-to-digital converter unit, and the base station comprises at least one of a shared transmission RF local oscillator TX_LO, a shared receiving RF local oscillator RX_LO, a shared digital signal processing unit and a shared transmission feedback unit, wherein
the shared TX_LO is connected to the modulation unit or the mixer unit in each of the RF signal transmitting units, and serves as a transmission RF local oscillator for all sectors in the base station;
the shared RX_LO is connected to the mixer unit in each of the RF signal receiving units, and serves as a receiving RF local oscillator for all the sectors in the base station;
the shared digital signal processing unit is connected to the digital-to-analog converter unit and/or the analog-to-digital converter unit, and adapted to process digital signals of all the sectors in the base station; and
the base station is **characterized in that** the shared transmission feedback unit is completely or partially connected to the RF signal transmitting unit that requires a transmission feedback in each sector, and adapted to perform a feedback processing on transmitting signals of all the sectors in the base station.

2. The sector-based base station according to claim 1, further comprising:
a switch, connected to the shared transmission feedback unit and the RF signal transmitting unit that requires a transmission feedback.

3. The sector-based base station according to claim 1 or 2, wherein the shared transmission feedback unit further comprises at least one of a shared mixer unit, a shared feedback RF local oscillator TXF_LO, a shared amplifier unit, a shared filter unit, and a shared Analog-to-digital converter unit,
the shared mixer unit is connected to an amplifier unit and/or the shared amplifier unit in the shared transmission feedback unit, and adapted to perform a mixing processing on all feedback signals during the feedback processing on the transmitting signals of all the sectors in the base station;
the shared TXF_LO is connected to a mixer unit and/or the shared mixer unit in the shared transmission feedback unit, and serves as a feedback RF local oscillator for all the feedback signals during the feedback processing on the transmitting signals of all the sectors in the base station;
the shared amplifier unit is connected to the mixer unit and/or the shared mixer unit in the shared transmission feedback unit and a filter unit or the shared filter unit in the shared transmission feedback unit, and adapted to perform an amplification processing on all the feedback signals during the feedback processing on the transmitting signals of all the sectors in the base station;
the shared filter unit is connected to the amplifier unit and/or the shared amplifier unit in the shared transmission feedback unit and an Analog-to-digital converter unit or the shared Analog-to-digital converter unit in the shared transmission feedback unit, and adapted to perform a filter processing on all the feedback signals during the feedback processing on the transmitting signals of all the sectors in the base station; and
the shared Analog-to-digital converter unit is connected to the filter unit and/or the shared filter unit in the shared transmission feedback unit and the shared digital signal processing unit and/or a digital signal processor (DSP), and adapted to perform an analog-to-digital conversion processing on all the feedback signals during the feedback processing on the transmitting signals of all the sectors in the base station.

## Patentansprüche

1. Auf Sektoren basierende Basisstation mit mindestens zwei Mengen von Hochfrequenz- bzw. HF-Signalsendeeinheiten und HF-Signalempfangseinheiten, wenn die Basisstation mindestens zwei Sektoren abdeckt, wobei jede der HF-Signalsendeeinheiten mit einer Modulationseinheit oder einer Mischereinheit und einer Digital-Analog-Umsetzereinheit ausgestattet ist, jede der HF-Signalempfangseinheiten mit einer Mischereinheit und einer Analog-Digital-Umsetzereinheit ausgestattet ist und die Basisstation mindestens eine der folgenden Alternativen umfasst: einen gemeinsam benutzten Sende-HF-Lokaloszillator TX_LO, einen gemeinsam benutzten Empfangs-HF-Lokaloszillator RX_LO, eine gemeinsam benutzte Digitalsignalverarbeitungseinheit und eine gemeinsam benutzte Senderückkopplungseinheit, wobei
der gemeinsam benutzte TX_LO mit der Modulationseinheit oder der Mischereinheit in jeder der HF-Signalsendeeinheiten verbunden ist und als ein Sende-HF-Lokaloszillator für alle Sektoren in der Basisstation dient;
der gemeinsam benutzte RX_LO mit der Mischereinheit in jeder der HF-Signalempfangseinheiten verbunden ist und als Empfangs-HF-Lokaloszillator für alle Sektoren in der Basisstation dient;
die gemeinsam benutzte Digitalsignalverarbeitungseinheit mit der Digital-Analog-Umsetzereinheit und/oder der Analog-Digital-Umsetzereinheit verbunden und dafür ausgelegt ist, Digitalsignale aller Sektoren in der Basisstation zu verarbeiten; und
die Basisstation **dadurch gekennzeichnet ist, dass** die gemeinsam benutzte Senderückkopplungseinheit vollständig oder teilweise mit der HF-Signalsendeeinheit, die eine Senderückkopplung in jedem Sektor erfordert, verbunden oder dafür ausgelegt ist, eine Rückkopplungsverarbeitung an Sendesignalen aller Sektoren in der Basisstation auszuführen.

2. Auf Sektoren basierende Basisstation nach Anspruch 1, ferner umfassend:
einen mit der gemeinsam benutzten Senderückkopplungseinheit und der HF-Signalsendeeinheit, die eine Senderückkopplung erfordert, verbundenen Schalter.

3. Auf Sektoren basierende Basisstation nach Anspruch 1 oder 2, wobei die gemeinsam benutzte Senderückkopplungseinheit ferner mindestens eine der folgenden Alternativen umfasst: eine gemeinsam benutzte Mischereinheit, einen gemeinsam benutzten Rückkopplungs-HF-Lokaloszillator TXF_LO, eine gemeinsam benutzte Verstärkereinheit, eine gemeinsam benutzte Filtereinheit und eine gemeinsam benutzte Analog-Digital-Umsetzereinheit,
die gemeinsam benutzte Mischereinheit mit einer Verstärkereinheit und/oder der gemeinsam benutzten Verstärkereinheit in der gemeinsam benutzten Senderückkopplungseinheit verbunden und dafür ausgelegt ist, während der Rückkopplungsverarbeitung an den Sendesignalen aller Sektoren in der Basisstation eine mischende Verarbeitung an allen Rückkopplungssignalen auszuführen;
der gemeinsam benutzte TXF_LO mit einer Mischereinheit und/oder der gemeinsam benutzten Mischereinheit in der gemeinsam benutzten Senderückkopplungseinheit verbunden ist und während der Rückkopplungsverarbeitung an den Sendesignalen aller Sektoren in der Basisstation als ein Rückkopplungs-HF-Lokaloszillator für alle Rückkopplungssignale dient;
die gemeinsam benutzte Verstärkereinheit mit der Mischereinheit und/oder der gemeinsam benutzten Mischereinheit in der gemeinsam benutzten Senderückkopplungseinheit und einer Filtereinheit oder der gemeinsam benutzten Filtereinheit in der gemeinsam benutzten Senderückkopplungseinheit verbunden und dafür ausgelegt ist, während der Rückkopplungsverarbeitung an den Sendesignalen aller Sektoren in der Basisstation eine Verstärkungsverarbeitung an allen Rückkopplungssignalen auszuführen;
die gemeinsam benutzte Filtereinheit mit der Verstärkereinheit und/oder der gemeinsam benutzten Verstärkereinheit in der gemeinsam benutzten Senderückkopplungseinheit und einer Analog-Digital-Umsetzereinheit oder der gemeinsam benutzten Analog-Digital-Umsetzereinheit in der gemeinsam benutzten Senderückkopplungseinheit verbunden und dafür ausgelegt ist, während der Rückkopplungsverarbeitung an den Sendesignalen aller Sektoren in der Basisstation eine Filterverarbeitung an allen Rückkopplungssignalen auszuführen; und
die gemeinsam benutzte Analog-Digital-Umsetzereinheit mit der Filtereinheit und/oder der gemeinsam benutzten Filtereinheit in der gemeinsam benutzten Senderückkopplungseinheit und der gemeinsam benutzten Digitalsignalverarbeitungseinheit und/oder einem Digitalsignalprozessor (DSP) verbunden und dafür ausgelegt ist, während der Rückkopplungsverarbeitung an den Sendesignalen aller Sektoren in der Basisstation eine Analog-Digital-Umsetzungsverarbeitung an allen Rückkopplungssignalen auszuführen.

## Revendications

1. Station de base de secteur, comprenant au moins deux ensembles de modules d'émission de signaux de fréquence radioélectrique (RF) et de modules de réception de signaux RF quand la station de base couvre au moins deux secteurs, dans laquelle chacun des modules d'émission de signaux RF est doté d'un module de modulation ou d'un module de mélangeur et d'un module de convertisseur numérique/analogique, chacun des modules de réception de signaux RF est doté d'un module de mélangeur et d'un module de convertisseur analogique/numérique, et la station de base comprend au moins l'un d'un oscillateur local RF d'émission partagé TX_LO, d'un oscillateur local RF de réception partagé RX_LO, d'un module de traitement de signaux numériques partagé et d'un module de contre-réaction d'émission partagé, dans laquelle
le TX_LO partagé est connecté au module de modulation ou au module de mélangeur dans chacun des modules d'émission de signaux RF, et sert d'oscillateur local RF d'émission pour tous les secteurs dans la station de base ;
le RX_LO partagé est connecté au module de mélangeur dans chacun des modules de réception de signaux RF et sert d'oscillateur local RF de réception pour tous les secteurs dans la station de base ;
le module de traitement de signaux numériques partagé est connecté au module de convertisseur numérique/analogique et/ou au module de convertisseur analogique/numérique, et adapté pour traiter les signaux numériques de tous les secteurs dans la station de base ; et
la station de base est **caractérisée en ce que** le module de contre-réaction d'émission partagé est connecté totalement ou partiellement au module d'émission de signaux RF qui exige une contre-réaction d'émission dans chaque secteur, et adapté pour exécuter un traitement de contre-réaction sur les signaux émis de tous les secteurs dans la station de base.

2. Station de base de secteur selon la revendication 1, comprenant en outre :
un commutateur, connecté au module de contre-réaction d'émission partagé et au module d'émission de signaux RF qui nécessite une contre-réaction d'émission.

3. Station de base de secteur selon la revendication 1 ou 2, dans laquelle le module de contre-réaction d'émission partagé comprend en outre au moins l'un d'un module de mélangeur partagé, d'un oscillateur local RF de contre-réaction partagé TXF_LO, d'un module d'amplificateur partagé, d'un module de filtre partagé et d'un module de convertisseur analogique/numérique partagé,
le module de mélangeur partagé est connecté à un module d'amplificateur et/ou au module d'amplificateur partagé dans le module de contre-réaction d'émission partagé, et adapté pour exécuter un traitement de mélange sur tous les signaux de contre-réaction durant le traitement de contre-réaction sur les signaux émis de tous les secteurs dans la station de base ;
le TXF_LO partagé est connecté à un module de mélangeur et/ou au module de mélangeur partagé dans le module de contre-réaction d'émission partagé, et sert d'oscillateur local RF de contre-réaction pour tous les signaux de contre-réaction durant le traitement de contre-réaction sur les signaux émis de tous les secteurs dans la station de base ;
le module d'amplificateur partagé est connecté au module de mélangeur et/ou au module de mélangeur partagé dans le module de contre-réaction d'émission partagé et à un module de filtre ou au module de filtre partagé dans le module de contre-réaction d'émission partagé, et adapté pour exécuter un traitement d'amplification sur tous les signaux de contre-réaction durant le traitement de contre-réaction sur les signaux émis de tous les secteurs dans la station de base ;
le module de filtre partagé est connecté au module d'amplificateur et/ou au module d'amplificateur partagé dans le module de contre-réaction d'émission partagé et à un module de convertisseur analogique/numérique ou au module de convertisseur analogique/numérique partagé dans le module de contre-réaction d'émission partagé, et adapté pour exécuter un traitement de filtrage sur tous les signaux de contre-réaction durant le traitement de contre-réaction sur les signaux émis de tous les secteurs dans la station de base ; et
le module de convertisseur analogique/numérique partagé est connecté au module de filtre et/ou au module de filtre partagé dans le module de contre-réaction d'émission partagé et au module de traitement de signaux numériques partagé et/ou à un processeur de signaux numériques (DSP), et adapté pour exécuter un traitement de conversion analogique/numérique sur tous les signaux de contre-réaction durant le traitement de contre-réaction sur les signaux émis de tous les secteurs dans la station de base.
